**Europäisches Patentamt**

**European Patent Office**

**Office européen des brevets**

(19)

(11) Veröffentlichungsnummer: **0 231 760**
**A1**

(12) # EUROPÄISCHE PATENTANMELDUNG

(21) Anmeldenummer: 87100216.8

(22) Anmeldetag: 09.01.87

(51) Int. Cl.³: **C 08 G 18/10**
C 08 G 18/38, C 08 G 18/48
C 08 G 18/76, C 08 G 18/83
C 09 K 3/10, C 08 G 59/66

(30) Priorität: 17.01.86 DE 3601189

(43) Veröffentlichungstag der Anmeldung:
12.08.87 Patentblatt 87/33

(84) Benannte Vertragsstaaten:
AT BE CH DE FR GB IT LI NL SE

(71) Anmelder: Henkel Kommanditgesellschaft auf Aktien
Postfach 1100 Henkelstrasse 67
D-4000 Düsseldorf-Holthausen(DE)

(72) Erfinder: González, René Andrés, Dr.
Bilker Allee 10
D-4000 Düsseldorf 1(DE)

(72) Erfinder: Emmerling, Winfried, Dr.
Lärchenweg 6
D-4006 Erkrath(DE)

(72) Erfinder: Podola, Tore
Deusserstrasse 31
D-4019 Monheim(DE)

(72) Erfinder: Neitzer, Klaus
Leo-Baeck-Strasse 47
D-4000 Düsseldorf 13(DE)

(54) **Verfahren zur Herstellung von Mercaptoendgruppen aufweisenden Oligourethanen und deren Verwendung in Dichtungsmassen bzw. als Zusatz zu vernetzbaren Epoxidharzsystemen.**

(57) Verfahren zur Herstellung von Oligourethanen mit endständigen Mercaptogruppen, wobei man als OH-gruppenhaltiges Alkylenoxidaddukt das Additionsprodukt von Propylenoxid an Trimethylolpropan und/oder Glycerin und/oder Trimethylolethan mit isomerem Toluylendiisocyanat im Überschuß, bezogen auf Hydroxylgruppen, umsetzt und die Isocyanatgruppen mit Mercaptoethanol zur Reaktion bringt. Hierbei soll das Additionsprodukt von Propylenoxid an den trifunktionellen Alkohol ein rechnerisches Molekulargewicht zwischen etwa 1800 und 6000, vorzugsweise 2000 und 5000 aufweisen, wobei die Reaktionsprodukte zur Herstellung von oxidativ härtenden Dichtungsmassen bzw. als Zusatz zu vernetzbaren Epoxidharzsystemen verwendet werden.

EP 0 231 760 A1

0231760

Henkel KGaA
13.01.1986
Dr.SchOe/Ge

Patentanmeldung
D 7425 EP

**"Verfahren zur Herstellung von Mercaptoendgruppen aufweisenden Oligourethanen und deren Verwendung in Dichtungsmassen bzw. als Zusatz zu vernetzbaren Epoxidharzsystemen"**

Gegenstand der vorliegenden Erfindung ist ein Verfahren zur Herstellung von Mercaptoendgruppen enthaltenden Oligourethanen bzw. Urethanprepolymeren sowie der Einsatz derartiger Produkte in oxidativ härtbaren Dichtungsmassen bzw. als Zusatzmittel zu vernetzbaren Epoxidharzsystemen

Zum Stand der Technik sind zahlreiche Variationen über die Herstellung von Mercaptoendgruppen enthaltenden Oligourethanen bekannt, wobei man von den verschiedenartigsten Polyolen ausgehen kann, die mit überschüssigem Di- oder Triisocyanaten umgesetzt werden. Unter den geeigneten Polyolen sind auch die Additionsprodukte von Alkylenoxiden wie Propylenoxid bzw. Ethylenoxid sowie Gemische der beiden Alkylenoxide beschrieben worden. Ausgezeichnet verarbeitbare Oligourethane werden erhalten, wenn man, ausgehend von einem Additionsprodukt aus Propylenoxid und Ethylenoxid an Trimethylolpropan zunächst Isophorondiisocyanat addiert, so daß ein Prepolymeres anfällt, welches noch hinreichend Isocyanatendgruppen aufweist. Diese werden dann mit der mindestens stöchiometrisch notwendigen Menge an Mercaptoethanol in ein isocyanatgruppenfreies Mercaptogruppen enthaltendes Oligourethan überführt. Derartige Produkte sind klar, praktisch farblos und haben eine etwa bei 100 Pa's liegende Viskosität bei Raumtemperatur.

Aufgabe der vorliegenden Erfindung war es, derartige Mercaptogruppen enthaltende Prepolymere hinsichtlich ihrer Fließfähigkeit,

. . .

d.h. ihrer Viskosität weiter zu verbessern. Außerdem bestand die Aufgabe darin, bei der Anwendung der Produkte in Dichtungsmassen bzw. beim Einsatz in Beschichtungsmitteln eine vergleichbar hervorragende Hydrolysebeständigkeit zu erhalten.

Diese Aufgabe wird erfindungsgemäß gelöst durch eine neuartiges Kombinationsverfahren zur Herstellung von Polyurethanen mit endständigen Mercaptogruppen, wobei man an Additionsprodukte des Propylenoxids an Trimethylolpropan und/oder Glycerin und/oder Trimethylolethan das Gemisch der isomeren Toluylendiisocyanate in einem einfach äquivalenten Überschuß, bezogen auf die Hydroxylgruppen, vorliegen und als Mercaptoethanol zur Umsetzung der gebildeten Isocyanatprepolymeren das Mercaptoethanol einsetzt.

Vorzugsweise verwendet man solche OH-gruppenhaltigen Reaktionsprodukte des Propylenoxids mit den vorstehend erwähnten Alkoholen, die ein rechnerisches Molekulargewicht zwischen etwa 1800 und 6000, vorzugsweise 2000 und 5000 aufweisen.

Die Reaktion zwischen den OH-gruppenhaltigen Propylenoxidaddukten und dem isomeren Gemisch des Toluylendiisocyanats wird vorzugsweise bei erhöhter Temperatur in an sich bekannter Weise vorgenommen. Die Reaktion läuft praktisch ohne Nebenreaktionen ab, und es ist im allgemeinen nicht erforderlich, irgendwelche Katalysatoren mitzuverwenden. Selbstverständlich ist - wie bei allen Reaktionen mit Isocyanaten - für einen Ausschluß von Feuchtigkeit zu sorgen.

Zwecks Vermeidung von Nebenreaktionen wird die anschließende Umsetzung mit dem Mercaptoethanol zweckmäßig bei Temperaturen bis 110 °C vorgenommen, vorzugsweise aber oberhalb 60 °C.

. . .

D 7425 EP                    - 3 -

Die bei der Reaktion anfallenden SH-terminierten Oligourethane zeigen eine gute Lagerstabilität und sind meist mehr als 1 Jahr bei Raumtemperatur stabil, d.h. sie verändern ihre Viskosität nur ganz geringfügig. Sie sind sogar in den meisten Fällen noch länger als 1 Jahr ohne weiteres einer Weiterverarbeitung bei Raumtemperatur zugänglich.

Die SH-terminierten Oligourethane können mit den bekannten oxidischen Härtern wie Mangandioxid und/oder Bleidioxid in den vernetzten Zustand überführt werden. Diese oxidative Härtung erlaubt die Herstellung von kautschukelastischen Massen mit einer guten Hydrolysebeständigkeit. Sie ist mindestens so gut wie bei den handelsüblichen Polysulfidpolymeren, in den meisten Fällen sogar verbessert.

Ein besonders günstiges Eigenschaftsbild wird erhalten, wenn man die Polypropylenoxidaddukte von Glycerin einsetzt. Innerhalb eines Molekulargewichtsbereichs zwischen 2000 und 6000 bei dem als Ausgangsmaterial verwendeten Propylenoxidaddukten erhält man nach der weiteren Umsetzung SH-terminierte Oligourethane, welche eine Viskosität bei Raumtemperatur zwischen 30 und 200 mPa's aufweisen. Sie härten bei Zusatz beispielsweise von Bleidioxid und/oder Mangandioxid innerhalb von 12 bis 48 Stunden zu elastischen klebfreien Polymeren.

Neben der Herstellung von ungefüllten dünnen Überzügen kann auch ein Zusatz von üblichen Füllstoffen und Weichmachern zur Herstellung von für Dichtungsmassen und Füllmassen verwendbaren Zusammensetzungen erfolgen. Als Weichmacher können im vorliegenden Fall beispielsweise Alkylsulfonsäureester von Phenolen, zum Beispiel Phenol selbst oder Kresol sowie Octylester von Phthalsäure oder auch sogenannte Polymerweichmacher vorgenommen werden.    In    diesen    Fällen    ist    es

. . .

D 7425 EP                           - 4 -

auch meist zweckmäßig, Füllstoffe wie etwa Kreide oder Titandioxid oder Anhydrit sowie Alumosilikat zuzusetzen.

Schließlich können die erfindungsgemäß herstellbaren SH-terminierten Oligourethane auch zusammen mit Epoxidharzen verwendet werden. In diesen Fällen erfolgt die Härtung im wesentlichen über einen Reaktionsmechanismus zwischen dem Epoxidharz und dem reaktiven SH-terminierten Oligomeren. Die Vernetzung derartiger Mischungen, welche zwischen 10 und 100 g, vorzugsweise zwischen 10 und 40 g an Epoxidharz, bezogen auf 100 g des Oligourethans enthalten, erfolgt zweckmäßig bei erhöhten Temperaturen zwischen etwa 40 und 100 °C, wobei man die Reaktionsgeschwindigkeit durch Zusatz der bekannten Katalysatoren beschleunigen kann. Aus diesem Grunde ist es auch zweckmäßig, etwa tertiäres Amin, z.B. Benzyldimethylamin zuzusetzen. Man erhält so innerhalb einer Zeit von etwa 24 Stunden bei den erwähnten Temperaturen ausgehärtete Reaktionsprodukte, die eine günstige Elastizität und eine gute Shore-Härte aufweisen.

## Beispiele 1 bis 3

Zur Herstellung der SH-terminierten Polyurethane wurde zunächst das Polyetherpolyol bei Raumtemperatur unter trockener Stickstoffatmosphäre in einem 6 Liter fassenden beheizbaren Rührgefäß mit der molar doppelten Menge Toluylendiisocyanat, bezogen auf OH-Gruppen, versetzt. Bei den Polyethertriolen handelte es sich um Propylenoxidaddukte an Glycerin, welche die der nachstehenden Tabelle zu entnehmenden Kenndaten hatten. Dabei ist in Abhängigkeit von der laufenden Nummer des Beispiels das Molekulargewicht, die OH-Zahl, die eingesetzte Menge an Polyol sowie die notwendige Menge an Toluylendiisocyanat wiedergegeben.

Nachdem das Toluylendiisocyanat eingerührt war, wurde die Reaktionsmischung auf 80 °C gebracht. Nachdem man bei dieser Temperatur 6 Stunden gerührt hatte, wurde das Mercaptoethanol zugesetzt und solange auf 100 °C erwärmt (etwa 1/2 Stunde), bis kein freies Isocyanat im IR-Spektrum zu erkennen war.

Nach dem Erkalten wurden klare, bei Raumtemperatur mittelviskose Flüssigkeiten erhalten, die bis zu einem Jahr lang ohne wesentliche Veränderung der Viskosität stabil waren.

Proben der Reaktionsprodukte wurden mit 2,5 % Mangandioxid (als übliche Paste mit Hilfsmitteln) versetzt und der Aushärtung überlassen. Die reagierende Gemische hatten eine Topfzeit von 3 Stunden bei Raumtemperatur und man erhielt nach 24 Stunden Lagerung bei Raumtemperatur Formkörper der Abmessung von 45 x 15 x 1200 mm, die eine Shore-A-Härte gemäß Beispiel 1 zwischen 15 und 25 gemäß Beispiel 2 zwischen 25 und 35 und. gemäß Beispiel 4 zwischen 40 und 50 aufwiesen.

. . .

D 7425 EP  − 6 −

## Tabelle I

| Bei-spiel | Mol-Gewicht (Zahlenmittel) | OH-Zahl | Polyol in g | Toluylen-diisocyanat | Mercapto-ethanol |
|---|---|---|---|---|---|
| 1 | 4400 | 40 | 4900 | 596 g | 252 g |
| 2 | 3900 | 42 | 4000 | 522 g | 242 g |
| 3 | 2400 | 67 | 4140 | 860 g | 1015 g |

Vergleichsversuch

Das Polyetherpolyol gemäß Beispiel 2 wurde anstelle von Toluylendiisocyanat mit 667 g Isophorondiisocyanat versetzt und anschließend weiterverfahren, wie in diesem Beispiel beschrieben. Das erhaltene Reaktionsprodukt war nach 14tägiger Lagerung bei Raumtemperatur nicht mehr fließfähig. Es konnte kein Bleidioxid mehr eingearbeitet werden, um daraus Formkörper herzustellen.

Beispiele 4 bis 6

Die Reaktionsprodukte gemäß Beispiel 1 bis 3 wurden in einer Standardrezeptur der vorliegenden Zusammensetzung untersucht. Die Rezeptur bestand aus:

30 % SH-terminiertes Polyurethan

20 % Weichmacher (handelsüblicher Alkansulfonsäureester eines Gemisches aus Phenol und Kresol)

40 % Calciumcarbonat (natürliche Kreide)

10 % Titandioxid

Zu dieser Paste wurden zur Herstellung von Formkörper von 45 x 15 x 120 mm sowie Formkörpern der Abmessung 20 x 4 x 2 mm jeweils auf 100 Gewichtsteile 2,5 Gewichtsprozent einer handelsüblichen Mangandioxidpaste gegeben. Diese Prüfkörper wurden bei 25 °C einen Tag lang gelagert und dann

. . .

der Prüfung unterzogen. Es wurde durch Fingertest zunächst die Klebfreiheit geprüft und dann an den Formkörpern der zuerst wiedergegebenen Dimension die Shore-A-Härte bestimmt und die Reißfestigkeit und Reißdehnung untersucht. Die Reißfestigkeit an den Prüfkörpern der als zweites wiedergegebenen Dimension wurde bei Raumtemperatur untersucht und ist in $N/mm^2$ angegeben, während die Reißdehnung nach dem Erhitzen während 24 Stunden auf 100 °C gemessen wurde. Die Messung selbst erfolgte bei Raumtemperatur. In der nachfolgenden Tabelle II sind in Abhängigkeit von den Nummern der Beispiele die Oberflächenklebrigkeit, die Reißfestigkeit in $N/mm^2$ und Reißdehnung in % wiedergegeben und zwar jeweils vor dem Erhitzen sowie nach einer Temperung von 24 Std bei 100 °C.

Tabelle II

| Beispiel | Oberflächen-klebrigkeit Shore A-Härte | Reißfestigkeit vor dem Erhitzen $(N/mm^{-2})$ | Reißdehnung nach Tempern (in %) |
|---|---|---|---|
| 4 | klebfrei 15-20 | 1,48/0,73 | 900/750 |
| 5 | klebfrei 19-22 | 1,20/0,75 | 700/550 |
| 6 | klebfrei | 1,50/0,67 | 300/250 |

Beispiele 7 und 8

Es wurden jeweils 100 g der Reaktionsprodukte nach den Beispielen 2 und 3 mit 5 g Dimethylbenzylamin sowie 30 g

. . .

D 7425 EP                    - 8 -

Epoxidharz auf Basis Diphenylolpropan und Epichlorhydrin mit einem Epoxidäquivalent 170 (Beispiele 7a und 8a) und dann mit 15 g des gleichen Epoxidharzes (Beispiele 7b und 8b) gemischt. Bei 50 °C wurden die Mischungen in einer Schichtdicke von 10 mm 24 Stunden gelagert und die Shore-A-Härte bestimmt. In der nachfolgenden Tabelle III ist in Abhängigkeit vom Beispiel der gefundene Wert für die Shore-Härte aufgeführt.

Tabelle III

| Beispiel | Shore-A-Härte |
| --- | --- |
| 7a | 31 |
| 8a | 63 |
| 7b | 22 |
| 8b | 32 |

. . .

Patentansprüche

1) Verfahren zur Herstellung von Oligourethanen mit endständigen Mercaptogruppen durch Umsetzen von Diisocyanaten mit unterschüssigen Mengen an Alkylenoxidaddukten an trifunktionelle aliphatische Alkohole, wobei sich die Diisocyanate in einem etwa einfach äquivalenten Überschuß, bezogen auf die Hydroxylgruppen vorliegen, und weitere Umsetzung mit einem Mercaptoalkanol, dadurch gekennzeichnet, daß man als OH-gruppenhaltiges Alkylenoxidaddukt das Additionsprodukt von Propylenoxid an Trimethylolpropan und/oder Glycerin und/oder Trimethylolethan sowie als Diisocyanat das Gemisch der isomeren Toluylendiisocyanate einsetzt und als Mercaptoalkanol das Mercaptoethanol verwendet.

2) Verfahren nach Anspruch 1, dadurch gekennzeichnet, daß das Additionsprodukt von Propylenoxid an den trifunktionellen Alkohol ein rechnerisches Molekulargewicht zwischen etwa 1800 und 6000, vorzugsweise 2000 und 5000 aufweist.

3) Verfahren nach Anspruch 1, dadurch gekennzeichnet, daß man die Umsetzung mit Mercaptoethanol bei einer Temperatur zwischen 60 und 110 °C vornimmt.

4) Verwendung der Reaktionsprodukte nach den Ansprüchen 1 und 3 zur Herstellung von oxidativ härtenden Dichtungsmassen.

5) Verwendung der Reaktionsprodukte nach den Ansprüchen 1 bis 3 als Zusatz zu vernetzbaren Epoxidharzsystemen.

. . .

Europäisches
Patentamt

**EUROPÄISCHER RECHERCHENBERICHT**

EP 87 10 0216

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 066 167 (BAYER) <br> * Ansprüche 1-4; Seite 5, Zeile 14 - Seite 6, Zeile 21; Seite 7, Zeilen 9-19; Beispiele 1,4 * <br><br>--- | 1-5 | C 08 G 18/10 <br> C 08 G 18/38 <br> C 08 G 18/48 <br> C 08 G 18/76 <br> C 08 G 18/83 <br> C 09 K 3/10 <br> C 08 G 59/66 |
| X | FR-A-1 601 407 (DOW) <br> * Zusammenfassung Punkte A1-A3,A5-A7,A9; Seite 1, Zeilen 35-40; Seite 5, Zeile 3 - Seite 6, Zeile 16; Seite 7, Zeilen 30-33; Seite 8, Zeilen 14-16,29-32; Beispiele 1,8 * <br><br>--- | 1-5 | |
| A | US-A-3 446 780 (E.R. BERTOZZI) <br> * Ansprüche 1-4,6,7; Spalte 4, Zeile 42 - Spalte 5, Zeile 32; Beispiel 2 * <br><br>----- | 1 | |

| | | | RECHERCHIERTE SACHGEBIETE (Int. Cl.4) |
|---|---|---|---|
| | | | C 08 G |

Der vorliegende Recherchenbericht wurde für alle Patentansprüche erstellt.

| Recherchenort <br> DEN HAAG | Abschlußdatum der Recherche <br> 08-05-1987 | Prüfer <br> VAN PUYMBROECK M.A. |
|---|---|---|